# EUROPÄISCHE PATENTSCHRIFT

(11) **EP 0 799 160 B1**
(45) Veröffentlichungstag und Bekanntmachung des Hinweises auf die Patenterteilung: **13.05.1998**
(21) Anmeldenummer: 95941726.2
(22) Anmeldetag: 19.12.1995
(51) Int. Cl.: C02F 9/00, C02F 1/62, C02F 1/66

(54) **VERFAHREN ZUR KONTINUIERLICHEN BEHANDLUNG VON GELÖSTE METALLE ENTHALTENDEM ABWASSER**
PROCESS FOR THE CONTINUOUS TREATMENT OF WASTE WATER CONTAINING DISSOLVED METALS
PROCEDE DE TRAITEMENT EN CONTINU D'EAUX USEES CONTENANT DES METAUX DISSOUS

(30) Priorität: 20.12.1994 DE 4445480
(43) Veröffentlichungstag der Anmeldung: 08.10.1997
(73) Patentinhaber: M.I.M. Hüttenwerke Duisburg Gesellschaft mit Beschränkter Haftung, 47249 Duisburg (DE)
(72) Erfinder: DOBISCH, Joachim, D-47906 Kempen (DE); STEIL, Hans-Ulrich, D-40489 Düsseldorf (DE); BEISHEIM, Birgit, D-47269 Duisburg (DE)
(74) Vertreter: Patentanwälte Gesthuysen, von Rohr, Weidener Schüll, Häckel
(86) Internationale Anmeldenummer: EP9505034
(87) Internationale Veröffentlichungsnummer: WO9619414

(56) Entgegenhaltungen:
- PATENT ABSTRACTS OF JAPAN vol. 13 no. 124 (C-580) ,27.März 1989 & JP,A,63 294986 (MIYOSHI OIL &FATS) 1.Dezember 1988,

## Beschreibung

Die Erfindung betrifft ein Verfahren zur kontinuierlichen Behandlung von bei metallurgischen Prozessen anfallenden, mehrere der Metalle Zink, Blei, Cadmium, Quecksilber, Kupfer, Nickel, Eisen enthaltendem Abwasser, durch Neutralisationsfällung mit Alkalihydroxid-, Alkalikarbonat- und/oder Kalkmilchlösungen mit einer Konzentration von 1 bis 10 Gew.-%.

Abwässer aus metallurgischen Prozessen der Nichteisenmetallherstellung dürfen gemäß § 7a Wasserhaushaltungsgesetz, Anhang 39 der Rahmen-Abwasserverwaltungsvorschrift, Bundesminister für Umwelt, Naturschutz und Reaktorsicherheit und der Länderarbeitsgemeinschaft Wasser, Gemeinsames Ministeralblatt, Seite 518 vom 08.09.89, nur nach Senkung der Schmutzfracht auf vorgegebene Werte, eingeleitet werden. Gleiche Anforderungen werden in Entwürfen internationaler Vereinbarungen (z.B. OSPARCOM) gestellt. Zur Minimierung der Schadstofffracht werden die Abwässer im Teilstrom kontinuierlich oder diskontinuierlich zur Neutralisationsfällung mit Kalkmilch oder Natronlauge behandelt. Nach der Abtrennung des dabei entstandenen Niederschlags werden die noch im Abwasser enthaltenden Restkonzentrationen der Metalle Zink, Blei, Cadmium, Quecksilber und Nickel mittels anorganischer oder organischer Sulfide soweit verringert, daß das verbleibende Abwasser in den Vorfluter einleitbar ist. Zur Senkung der Schadstofffracht ist demnach eine mehrstufige Fällung mit anschließender Filtration oder Sedimentation der entstandenen Niederschläge erforderlich. Nachteilig ist bei der Sulfidfällung die dabei entstehende Belastung des Abwassers mit sauerstoffzehrenden Schwefelverbindungen durch notwendigen Überschuß an Sulfid. Der Sulfidüberschuß wird durch Fällen mit Eisen-(III)-Salzlösungen entfernt.

Aus EP-PS 0 222 305 ist ein Verfahren zur Abscheidung eines Metalls bekannt, wobei ein Metallabscheidemittel, das ein N-substituiertes Polyaminderivat ist, das pro Molekül mindestens eine Carbodithio-Gruppe und/oder mindestens eine Carbodithioat-Salzgruppe als N-Substituenten enthält und zusammen mit mindestens einer Verbindung aus der Gruppe Natriummonosulfid, Natriumpolysulfide und Natriumhydrogensulfid zu einem Metallionen enthaltenden Abwasser zugegeben wird, um die Metallionen aus dem Abwasser abzuscheiden und zu entfernen. Dabei beträgt das Gewichtsverhältnis des Metallabscheidemittels zu Natriumsulfid 1 : 09 bis 99 : 1.

Es ist die Aufgabe der vorliegenden Erfindung, das eingangs beschriebene Abwasserbehandlungsverfahren so auszubilden, daß die Entfernung der Metalle aus dem Abwasser in wirtschaftlich und umweltverträglich verbesserter Weise erfolgt, wobei die verwendete Sulfidmenge auf ein Minimum begrenzt werden soll.

Die Lösung dieser Aufgabe geschieht durch die im Anspruch 1 angegebenen Maßnahmen.

In den Ansprüchen 2 bis 7 sind weitere vorteilhafte Ausgestaltungen des Verfahrens gemäß Anspruch 1 wiedergegeben.

Das Verfahren ist ferner dadurch gekennzeichnet, daß nach der Neutralisationsfällung aus dem Abwasserstrom ein Teilstrom kontinuierlich entnommen, dessen Restgehalt an Metallionen selektiv bestimmt, dieses Meßergebnis mit dem Meßergebnis der Abwassermenge in Beziehung gesetzt und mittels eines Rechners die Dosierung der Sulfidzugabe für die Sulfidfällung gesteuert wird.

Vorzugsweise wird als Leitgröße für die Berechnung und Steuerung der zuzusetzenden Sulfidmenge der Restgehalt eines Metalls, vorzugsweise des Cadmiums benutzt.

Es ist auch möglich, als Leitgröße für die Berechnung und Steuerung der zuzugebenden Sulfidmenge die Restkonzentrationen einer Auswahl der Metalle zu benutzen.

Mit dem erfindungsgemäßen Verfahren gelingt es, Abwässer aus metallurgischen Prozessen, die insbesondere Zink, Blei, Cadmium, Quecksilber und Nickel enthalten, in einem quasi - einstufigen Verfahren so zu behandeln, daß die Metalle bis auf geringe Restkonzentrationen entfernt sind. Bei dem Verfahren entsteht kein Sulfidüberschuß nach erfolgter Sulfidfällung und Neutralisations- und Sulfidfällung erfolgen in einer Stufe. Das Verfahren kann kontinuierlich im Durchlaufverfahren für Mengen bis zu 1000 m³/h Abwasser und mehr betrieben werden. Die abgetrennten Niederschläge können in vorteilhafter Weise wieder dem metallurgischen Prozeß zugeführt werden.

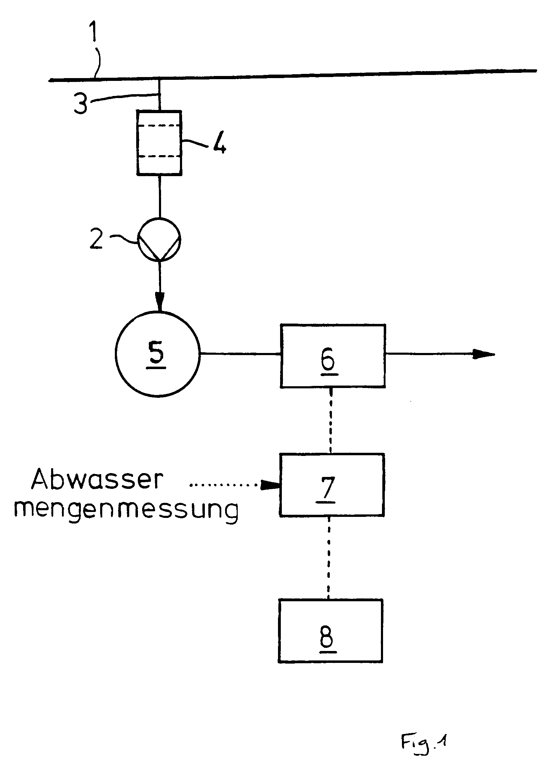

Das erfindungsgemäße Verfahren wird durch das in der Zeichnung wiedergegebene Grundfließbild näher und beispielhaft erläutert.

Aus dem Abwasserstrom (1) wird nach erfolgter Kombinationsfällung mittels Natronlauge und Sulfiden mit einer Pumpe (2) kontinuierlich ein Teilstrom (3) über einen Filter (4) zur Abtrennung von Feststoffen entnommen. Zu diesem Teilstrom werden mittels einer Mischpumpe (5) Chemikalien zum Ansäuern des Abwassers zudosiert und das in einem vorgegebenen Verhältnis erhaltene Gemisch einer Analysevorrichtung (6), z.B. einem Spektrometer mit Plasmafackel zugeführt, mit deren Hilfe die Bestimmung der Gehalte an gelösten Restmetallen erfolgt. Durch den Gehalt der Metalle und die gleichzeitig gemessene Abwassermenge wird die Zugabe an Sulfid zum Abwasserstrom (1) über einen Rechner (7), der ein Zugabeventil (8) regelt, gesteuert. Durch das Verfahren ist es möglich, die Menge der nach der Neutralisationsfällung in dem Abwasser enthaltenen Metalle kontinuierlich zu ermitteln und die Dosierung von Sulfidierungsmitteln exakt zu steuern.

Die Erfindung wird anhand von Beispielen näher erläutert.

Das Abwasser wies die folgenden Ionenkonzentrationen auf:

**Tabelle 1**

| Zn | Pb | Cd | Cu | Fe | Ni | As | Hg | Cl | SO4 | Sulfid-S |
|---|---|---|---|---|---|---|---|---|---|---|
| | | | | | | | | | | |

| mg/l(Gesamtkonzentration) | | | | | | | | | | |
|---|---|---|---|---|---|---|---|---|---|---|
| 207 | 41 | 8,1 | 2,1 | 3,3 | 0,5 | 0,3 | 0,08 | 520 | 330 | - |

| mg/l(gelöst vorgefundene Ionen nach der Fällung) | | | | | | | | | | |
|---|---|---|---|---|---|---|---|---|---|---|
| 6,1 | 0,5 | 4,6 | 0,05 | 0,07 | 0,05 | 0,02 | 0,07 | 520 | 320 | <0.1 |
| pH-Wert des Rohwassers = 6.4 | | | | | | | | | | |

11 des Rohwassers wurde mit 5,7 g einer Natronlauge (50 g/l) bei 30°C unter Rühren versetzt und der Rückstand abfiltriert. Der Rückstand betrug 760 mg und wies einen Wassergehalt von 50 Gew.-% auf. Die Analyse des Rückstands hatte das folgende Resultat:

**Tabelle 2**

| Zn | Pb | Cd | Cu | Fe | Ni | As | Hg | Cl | SO4 | Sulfid-S |
|---|---|---|---|---|---|---|---|---|---|---|
| | | | | | | | | | | |

| in % | | | | | | | | | | |
|---|---|---|---|---|---|---|---|---|---|---|
| 27,2 | 5,4 | 1,06 | 0,27 | 0,43 | 0,07 | 0,04 | 0,009 | 0,2 | 1,3 | 1 |
| Feuchte = 50 % | | | | | | | | | | |

Das Filtrat hatte nach der Abtrennung des Rückstands der Hydroxidfällung die folgende Ionenkonzentration:

**Tabelle 3**

| Zn | Pb | Cd | Cu | Fe | Ni | As | Hg | Cl | SO4 | Sulfid-S |
|---|---|---|---|---|---|---|---|---|---|---|
| | | | | | | | | | | |

| mg/l(gelöst vorgefundene Ionen) | | | | | | | | | | |
|---|---|---|---|---|---|---|---|---|---|---|
| 0,20 | 0,20 | 0,040 | 0,04 | 0,04 | 0,03 | 0,02 | 0,01 | 520 | 330 | n.n. |
| pH-Wert = 9,5 n.n. = nicht nachweisbar | | | | | | | | | | |

Das Filtrat wurde mit 0,08 ml einer Natriumsulfidlösung (120 g/l) unter Rühren versetzt. Der abgetrennte Metallsulfidrückstand betrug 1 mg und wies einen Wassergehalt von 50 Gew.-% auf. Das Filtrat hatte die folgende Ionenkonzentration:

**Tabelle 4**

| Zn | Pb | Cd | Cu | Fe | Ni | As | Hg | Cl | SO4 | Sulfid-S |
|---|---|---|---|---|---|---|---|---|---|---|
| | | | | | | | | | | |

| mg/l(gelöst vorgefundene Ionen) | | | | | | | | | | |
|---|---|---|---|---|---|---|---|---|---|---|
| 0,1 | 0,09 | 0,008 | 0,02 | 0,02 | 0,01 | 0,01 | 0,002 | 520 | 330 | 3,8 |

### 2. Beispiel

11 des Abwassers wurde mit 5,7 g einer Natronlauge (50 g/l) bei 30°C unter Rühren versetzt und nach 10 min mit 0,08 ml einer Natriumsulfidlösung (120 g/l) unter Rühren versetzt. Der abgetrennte Rückstand betrug 762 mg und wies einen Wassergehalt von 50 Gew.-% auf. Die Analyse des Rückstandes ergab das folgende Resultat:

**Tabelle 5**

| Zn | Pb | Cd | Cu | Fe | Ni | As | Hg | Cl | SO4 | Sulfid-S |
|---|---|---|---|---|---|---|---|---|---|---|
| | | | | | | | | | | |

| in % | | | | | | | | | | |
|---|---|---|---|---|---|---|---|---|---|---|
| 27,2 | 5,4 | 1,06 | 0,27 | 0,43 | 0,07 | 0,04 | 0,01 | 0,02 | 1,3 | 1,5 |
| Feuchte = 50 % | | | | | | | | | | |

Das vom Rückstand abgetrennte Filtrat hatte die folgende Ionenkonzentration:

**Tabelle 6**

| Zn | Pb | Cd | Cu | Fe | Ni | As | Hg | Cl | SO4 | Sulfid-S |
|---|---|---|---|---|---|---|---|---|---|---|
| | | | | | | | | | | |

| mg/l(gelöst vorgefunden Ionen) | | | | | | | | | | |
|---|---|---|---|---|---|---|---|---|---|---|
| 0,11 | 0,08 | 0,008 | 0,02 | 0,02 | 0,01 | 0,01 | 0,002 | 520 | 330 | <0,1 |
| pH-Wert = 9.6 | | | | | | | | | | |

### 3. Beispiel

11 des Abwassers wurde mit 5,7 g einer Natronlauge (50 g/l) bei 30°C unter Rühren versetzt und nach 10 min mit 12 mg einer Organosulfidlösung (γ = 1,17) des Organosulfids Nalmet (Natriumdithiocarbamat in gelöster Form) unter Rühren vermischt. Der abgetrennte Rückstand betrug 763 mg und wies einen Wassergehalt von 50 Gew.-% auf. Die Analyse des abgetrennten Rückstands ergab das folgende Resultat:

**Tabelle 7**

| Zn | Pb | Cd | Cu | Fe | Ni | As | Hg | Cl | SO4 | Sulfid-S |
|---|---|---|---|---|---|---|---|---|---|---|
| | | | | | | | | | | |

| in % | | | | | | | | | | |
|---|---|---|---|---|---|---|---|---|---|---|
| 27,2 | 5,4 | 1,06 | 0,27 | 0,43 | 0,07 | 0,04 | 0,01 | 0,2 | 1,3 | 1,1 |
| Feuchte = 50 % | | | | | | | | | | |

Das von dem Rückstand abgetrennte Filtrat hatte die folgende Ionenkonzentration:

**Tabelle 8**

| Zn | Pb | Cd | Cu | Fe | Ni | As | Hg | Cl | SO4 | Sulfid-S |
|---|---|---|---|---|---|---|---|---|---|---|
| | | | | | | | | | | |

| mg/l(gelöst vorgefundene Ionen) | | | | | | | | | | |
|---|---|---|---|---|---|---|---|---|---|---|
| 0,5 | 0,05 | 0,003 | 0,02 | 0,02 | 0,003 | 0,005 | 0,001 | 520 | 330 | <0,1 |
| pH-Wert = 9.6 | | | | | | | | | | |

## Patentansprüche

1. Verfahren zur kontinuierlichen Behandlung von bei metallurgischen Prozessen anfallenden, mehrere der Metalle, Zink, Blei, Cadmium, Quecksilber, Kupfer, Nickel, Eisen enthaltendem Abwasser, durch Neutralisationsfällung mittels Alkalihydroxid-, Alkalikarbonat- und/oder Kalkmilchlösungen mit einer Konzentration von 1 bis 10 Gew-%., dadurch gekennzeichnet, daß dem einen pH-Wert von 8 bis 10 und eine Temperatur von 10 bis 40° C aufweiser den Abwässer, nach beendeter Neutralisationsfällung, eine Lösung aus anorganischem oder organischem Sulfid, einzeln und/oder im Gemisch mit einem stöchiometrischen Überschuß von 175 bis 300 %, bezogen auf den Gehalt an gelösten Restmetallen zugegeben und der Niederschlag der Neutralisations- bzw. Karbonatfällung und der Sulfidfällung zusammen von dem Abwasser nach einer Reaktionszeit der Sulfidfällung von 2 bis 20 min, abgetrennt werden.

2. Verfahren nach Anspruch 1, dadurch gekennzeichnet, daß die Reaktionszeit 5 bis 15 min beträgt.

3. Verfahren nach einem der Ansprüche 1 und 2, dadurch gekennzeichnet, daß der pH-Wert des Abwassers auf 8,8 bis 9,6 eingestellt wird.

4. Verfahren nach einem der Ansprüche 1 bis 3, dadurch gekennzeichnet, daß die Neutralisationsfällung mit Kalkmilch und/oder Natronlauge erfolgt.

5. Verfahren nach einem der Ansprüche 1 bis 3, dadurch gekennzeichnet, daß die Fällung mit Natriumkarbonat erfolgt.

6. Verfahren nach einem der Ansprüche 1 bis 5, dadurch gekennzeichnet, daß die Sulfidfällung mit Natriumsulfid erfolgt.

7. Verfahren nach einem der Ansprüche 1 bis 5, dadurch gekennzeichnet, daß die Sulfidfällung mit Trimercaptotriazin und/oder Natriumdithiocarbaminat erfolgt.

8. Verfahren nach einem der Ansprüche 1 bis 7, dadurch gekennzeichnet, daß die Sulfidkonzentration der Lösung 0,5 bis 15 Gew-%, vorzugsweise 1 bis 5 Gew-% beträgt.

9. Verfahren nach einem der Ansprüche 1 bis 8, dadurch gekennzeichnet, daß die Trennung des Niederschlags durch Sedimentation und/oder Filtration erfolgt.

10. Verfahren nach einem der Ansprüche 1 bis 8, dadurch gekennzeichnet, daß nach der Neutralisationsfällung aus dem Abwasserstrom ein Teilstrom kontinuierlich entnommen, dessen Restgehalt an Metallen selektiv bestimmt, dieses Meßergebnis mit dem Meßergebnis der Menge des Abwasserstroms in Beziehung gesetzt und mittels eines Rechners die Dosierung der Sulfidzugabe gesteuert wird.

11. Verfahren nach Anspruch 10, dadurch gekennzeichnet, daß als Leitgröße für die Berechnung und Steuerung der Sulfidzugabe der Restgehalt eines Metalls, vorzugsweise des Cadmiums dient.

12. Verfahren nach Anspruch 10, dadurch gekennzeichnet, daß als Leitgröße für die Berechnung und Steuerung der Sulfidzugabe die Konzentration einer Auswahl der Metalle benutzt wird.

## Claims

1. A process for the continuous treatment of waste water which arises in metallurgical processes and which contains a plurality of the metals zinc, lead, cadmium, mercury, copper, nickel and iron, by neutralisation precipitation by means of alkali hydroxide, alkali carbonate and/or milk of lime solutions having a concentration of 1 to 10 % by weight, characterised in that after completion of the neutralisation precipitation a solution of inorganic or organic sulphide is added, separately and/or in admixture, and in a stoichiometric excess of 175 to 300 % with respect to the content of dissolved residual metals, to the waste water which is at a pH of 8 to 10 and a temperature of 10 to 40°C, and the precipitate from the neutralisation- or carbonate precipitation and from the sulphide precipitation are separated together from the waste water after a time of reaction of sulphide precipitation of 2 to 20 minutes.

2. A process according to claim 1, characterised in that the time of reaction is 5 to 15 minutes.

3. A process according to either one of claims 1 or 2, characterised in that the pH of the waste water is adjusted to 8.8 to 9.6.

4. A process according to any one of claims 1 to 3, characterised in that neutralisation precipitation is effected with milk of lime and/or caustic soda.

5. A process according to any one of claims 1 to 3, characterised in that precipitation is effected with sodium carbonate.

6. A process according to any one of claims 1 to 5, characterised in that sulphide precipitation is effected with sodium sulphide.

7. A process according to any one of claims 1 to 5, characterised in that sulphide precipitation is effected with trimercaptotriazine and/or sodium dithiocarbamate.

8. A process according to any one of claims 1 to 7, characterised in that the sulphide concentration of the solution is 0.5 to 15 % by weight, preferably 1 to 5 % by weight.

9. A process according to any one of claims 1 to 8, characterised in that separation of the precipitate is effected by sedimentation and/or filtration.

10. A process according to any one of claims 1 to 8, characterised in that after neutralisation precipitation a partial stream is continuously removed from the waste water stream, the residual content of metals of which partial stream is selectively determined, this measured result is related to the measured result for the amount of the waste water stream, and the proportioning of the sulphide addition is controlled by means of a computer.

11. A process according to claim 10, characterised in that the residual content of a metal, preferably of cadmium, is employed as the command variable for calculating and controlling the sulphide addition.

12. A process according to claim 10, characterised in that the concentration of a selection of metals is employed as the command variable for calculating and controlling the sulphide addition.

## Revendications

1. Procédé pour le traitement en continu d'eaux usées obtenues dans des procédés métallurgiques, contenant plusieurs métaux parmi le zinc, le plomb, le cadmium, le mercure, le cuivre, le nickel, le fer, via précipitation par neutralisation au moyen de solutions d'hydroxydes de métaux alcalins, de carbonates de métaux alcalins et/ou de lait de chaux en une concentration de 1 à 10% en poids, caractérisé en ce qu'on ajoute aux eaux usées présentant une valeur de pH de 8 à 10 et une température de 10 à 40°C, au terme de la précipitation par neutralisation, une solution constituée par du sulfure inorganique ou organique, individuellement et/ou en mélange, avec un excès stoechiométrique de 175 à 300% rapportés à la teneur en métaux résiduels dissous, et on sépare des eaux usées le résidu de la précipitation par neutralisation, respectivement de la précipitation à l'aide d'un carbonate et de la précipitation au sulfure, après un temps réactionnel de la précipitation au sulfure de 2 à 20 minutes.

2. Procédé selon la revendication 1, caractérisé en ce que le temps réactionnel s'élève de 5 à 15 minutes.

3. Procédé selon l'une quelconque des revendications 1 et 2, caractérisé en ce qu'on règle la valeur de pH des eaux usées à une valeur de 8,8 à 9,6.

4. Procédé selon l'une quelconque des revendications 1 à 3, caractérisé en ce qu'on effectue la précipitation par neutralisation avec du lait de chaux et/ou de la soude caustique.

5. Procédé selon l'une quelconque des revendications 1 à 3, caractérisé en ce qu'on effectue la précipitation avec du carbonate de sodium.

6. Procédé selon l'une quelconque des revendications 1 à 5, caractérisé en ce qu'on effectue la précipitation au sulfure avec du sulfure de sodium.

7. Procédé selon l'une quelconque des revendications 1 à 5, caractérisé en ce qu'on effectue la précipitation au sulfure avec la trimercaptotriazine et/ou le dithiocarbamate de sodium.

8. Procédé selon l'une quelconque des revendications 1 à 7, caractérisé en ce que la concentration de la solution en sulfure s'élève de 0,5 à 15% en poids, de préférence de 1 à 5% en poids.

9. Procédé selon l'une quelconque des revendications 1 à 8, caractérisé en ce qu'on effectue la séparation du précipité par sédimentation et/ou par filtration.

10. Procédé selon l'une quelconque des revendications 1 à 8, caractérisé en ce que, après la précipitation par neutralisation, on prélève en continu un courant partiel du courant des eaux usées, on détermine de manière sélective sa teneur résiduelle en métaux, on rapporte ce résultat de mesure au résultat de mesure de la quantité du courant des eaux usées et, au moyen d'un calculateur, on règle le dosage de l'addition de sulfure.

11. Procédé selon la revendication 10, caractérisé en ce que, à titre de grandeur de référence pour le calcul et le réglage de l'addition de sulfure, on utilise la teneur résiduelle d'un métal, de préférence du cadmium.

12. Procédé selon la revendication 10, caractérisé en ce qu'on utilise, à titre de grandeur de référence pour le calcul et le réglage de l'addition de sulfure, la concentration d'une sélection des métaux.
